# EUROPEAN PATENT SPECIFICATION

(11) **EP 1 920 181 B1**
(45) Date of publication and mention of the grant of the patent: **16.03.2011**
(21) Application number: 06773665.2
(22) Date of filing: 21.06.2006
(51) Int. Cl.: F16L 21/06

(54) **STOP ASSEMBLY FOR PIPE COUPLINGS**
ANSCHLAGANORDNUNG FÜR ROHRKUPPLUNGEN
ENSEMBLE BUTEE POUR RACCORDES DE TUYAUTERIES

(30) Priority: 24.08.2005 US 210376
(43) Date of publication of application: 14.05.2008
(73) Proprietor: Victaulic Company, Easton, PA 18040 (US)
(72) Inventor: DOLE, Douglas, R., Whitehouse Station, New Jersey 08889 (US)
(74) Representative: Gervasi, Gemma
(86) International application number: PCT/US2006/024103
(87) International publication number: WO 2007/024326

(56) References cited:
- FR-A- 1 138 312
- US-A- 3 425 473
- US-A- 3 425 473
- US-A- 3 680 619
- US-A- 4 064 921
- US-A- 4 137 610
- US-A- 4 966 395
- US-A- 5 034 788
- US-B1- 6 171 039
- US-B1- 6 171 039

## Description

### Field of the Invention

This invention relates to stop assemblies usable with pipe coupling segments for maintaining the coupling segments in spaced apart relation during assembly of a pipe joint.

### Background of the Invention

Mechanical couplings for joining pipe elements in end to end relation find widespread use throughout industry for creating piping networks, used for example, in fire suppression sprinkler systems in warehouses, office buildings and the like.

Such couplings comprise two or more interconnectable segments that are positionable circumferentially surrounding the end portions of the co-axially aligned pipe elements. The term "pipe element" is used herein to describe any pipe-like item or component having a pipe like form. Pipe elements include pipe stock, pipe fittings such as elbows, caps and tees as well as fluid control components such as valves, reducers, strainers, restrictors, pressure regulators and the like.

Each mechanical coupling segment comprises a housing having arcuate surfaces which project radially inwardly from the housing and engage plain end pipe elements, pipe elements having radially extending shoulders or circumferential grooves that extend around each of the pipe elements to be joined. Engagement between the arcuate surfaces and the pipe elements provides mechanical restraint to the joint and ensures that the pipe elements remain coupled even under high internal pressure and external forces. The housings define an annular channel that receives a gasket or seal, typically an elastomeric ring which engages the ends of each pipe element and cooperates with the segments to provide a fluid tight seal. The segments have connection members, typically in the form of lugs which project outwardly from the housings. The lugs are adapted to receive fasteners, such as nuts and bolts, which are adjustably tightenable to draw the segments toward one another. An example of such coupling is disclosed in document US 4, 966,395.

Installation of a coupling to form a pipe joint can be a tedious and time consuming process when mechanical couplings are used. The installation process described below is based upon a coupling that engages pipes having circumferential grooves, it being understood that the description applies substantially to other types of pipes as well. Typically, the coupling is received by the technician with the segments bolted together and the ring seal captured within the segments' channels. The technician first disassembles the coupling by unbolting it, removes the ring seal, lubricates it (if not pre-lubricated) and places it around the ends of the pipe elements to be joined. Installation of the ring seal requires that it be lubricated and stretched to accommodate the pipe elements, an often difficult and messy task, as the ring seal is usually stiff and the lubrication makes manual manipulation of the seal difficult. With the ring seal in place on both pipe elements, the segments are then placed one at a time straddling the ends of the pipe elements and capturing the ring seal against them. During placement, the segments engage the seal, the arcuate surfaces are aligned with the grooves, the bolts are inserted through the lugs, the nuts are threaded onto the bolts and tightened, drawing the coupling segments toward one another, compressing the seal and engaging the arcuate surface within the grooves.

As evident from the previous description, installation of mechanical pipe couplings according to the prior art requires that the technician typically handle at least seven individual piece parts (and more when the coupling has more than two segments), and must totally disassemble and reassemble the coupling. Significant time, effort and expense would be saved if the technician could install a mechanical pipe coupling without first totally disassembling it and then reassembling it, piece by piece.

### Summary of the Invention

The invention concerns a stop assembly for limiting the motion of a shank of a fastener extended through an opening in a body, such as a pipe coupling. The stop assembly comprises a retention element positionable on the fastener at a predetermined position along the shank. The retention element has a first surface portion engageable with the shank for holding the retention element at the predetermined position. The retention element further has a second surface portion engageable with the body. Engagement of the second surface portion with the body limits and motion of the shank through the opening.

According to the invention, the assembly also includes a second retention element positionable on the fastener at a second predetermined position along the shank. The second retention element has a first surface portion engageable with the shank for holding the second retention element at the second predetermined position. The second retention element further has a second surface portion engageable with a second body, such as a cooperating coupling segment. The second body has a second opening therein. Engagement of the second surface portion with the second body limits motion of the shank through the second opening.

The invention also includes a pipe coupling positionable straddling facing end portions of a pair of pipe elements for securing the pipe elements together in end-to-end relationship. The pipe coupling comprises a plurality of coupling segments engageable with the pipe elements for holding them in the end to end relationship. The coupling segments are positioned in facing relation and have paired aligned openings extending therethrough.

A fastener for joining the coupling segments together has an elongated shank that extends through a pair of the aligned openings. A retention element has a first surface portion engaged with the shank. The retention element also has a second surface portion engaged with one of the coupling segments for limiting motion of the fastener relative to the one coupling segment.

Preferably, the coupling includes a second retention element having a first surface portion engaged with the shank. The second retention element has a second surface portion engaged with the other of the coupling segments for limiting motion of the fastener relative to the other coupling segment. The first and second retention elements cooperate to maintain the coupling segments in spaced apart relation.

### Brief Description of the Drawings

Figure 1 is a partial sectional axial view of a pipe coupling having coupling segments maintained in spaced apart relation by a stop assembly according to the invention;
Figure 2 is a view taken at line 2-2 of Figure 1;
Figure 3 is an axial view of the pipe coupling of Figure 1 wherein the coupling segments are moved into engagement with a pair of pipe ends;
Figure 4 is a partial sectional axial view of a pipe coupling having another embodiment of a stop assembly according to the invention;
Figure 5 is a view taken at line 5-5 of Figure 4;
Figure 6 is a partial sectional axial view of a pipe coupling having another embodiment of a stop assembly according to the invention;
Figure 7 is a view taken at line 7-7 of Figure 6;
Figure 8 is a partial sectional axial view of a pipe coupling having another embodiment of a stop assembly according to the invention;
Figure 9 is a view taken at line 9-9 of Figure 8;
Figure 10 is a partial sectional axial view of a pipe coupling having another embodiment of a stop assembly according to the invention;
Figure 11 is a view taken at line 11-11 of Figure 10;
Figure 12 is a partial sectional axial view of a pipe coupling having a stop assembly not part of the invention;
Figure 13 is a partial sectional axial view of a pipe coupling having another embodiment of a stop assembly according to the invention;
Figure 14 is a view taken at line 14-14 of Figure 13;
Figure 15 is a partial sectional axial view of a pipe coupling having another embodiment of a stop assembly according to the invention;
Figure 16 is a view taken at line 16-16 of Figure 15; and
Figure 17 is a partial sectional axial view of a pipe coupling having a stop assembly according to the invention.

### Detailed Description of the Embodiments

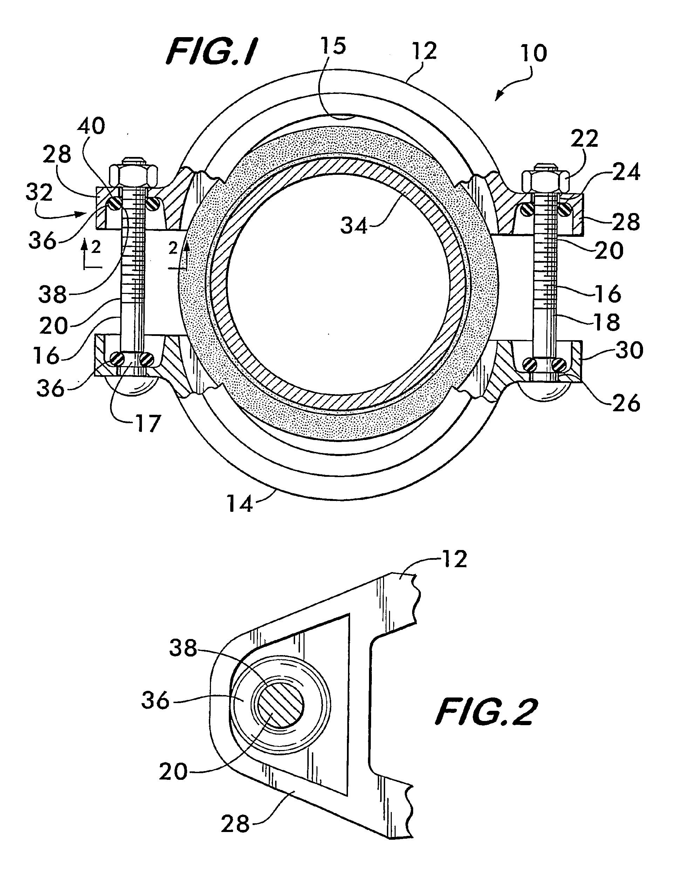

Figure 1 shows a pipe coupling 10 having coupling segments 12 and 14 positioned in facing relation with one another. The segments have arcuate surfaces 15 that engage the ends of pipe elements for securing them in end to end relationship. Segments 12 and 14 are joined to one another by fasteners 16, typically comprising a bolt 18 having a threaded shank 20 that engages a nut 22.

The bolts 18 extend through openings 24 and 26 in the body of the segments, the body often including lugs 28 and 30 designed to receive and engage the nut and bolt. Lugs 28 and 30 are configured so as to align the openings 24 and 26 to receive the shank 20 of the bolt 18.

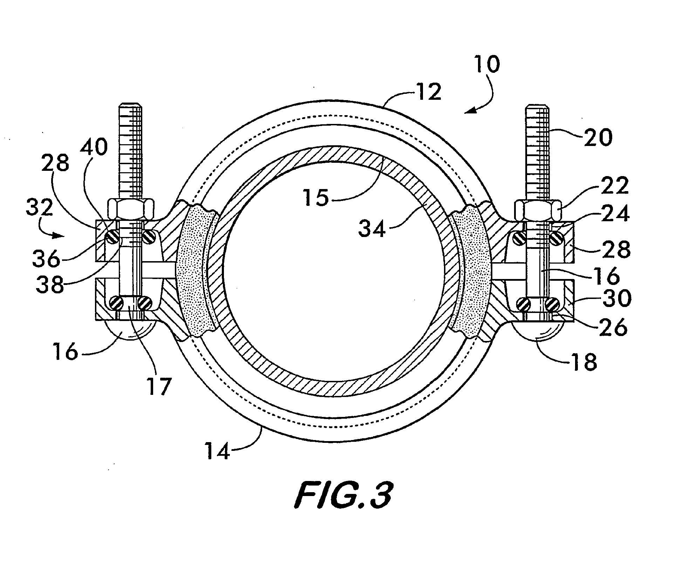

Coupling 10 includes a stop assembly 32 that limits the motion of the shank 20 through the openings in a body such as 24 and 26. This is useful for efficient assembly of the pipe joint as it allows the coupling 10 to be pre-assembled at the factory with the coupling segments 12 and 14 maintained in spaced apart relation by the stop assembly. The spaced apart relation allows the coupling to receive the pipe elements without disassembly, thereby reducing the number of loose parts which a technician must handle when assembling the joint and decreasing the labor and time required. Figure 1 shows the coupling 10 with the segments 12 and 14 in spaced apart relation ready to receive pipe elements, and Figure 3 illustrates the pipe coupling engaging pipe elements 34 to form a pipe joint, the pipe elements having been inserted between the coupling segments 12 and 14 while in the spaced apart configuration. It may be advantageous to modify the coupling segments to facilitate insertion of the pipe elements between them. Such modifications may include, for example, forming notches in the arcuate surfaces adjacent to the lugs to provide clearance for the pipe elements, or providing arcuate surfaces that do not extend completely around the segment.

Various embodiments of stop assemblies are described below. All of the embodiments include a retention element that is positionable on the fastener shank. The retention element has a surface portion that engages the shank to hold it in a predetermined position on the shank. The retention element further includes another surface portion that is engageable with the body having the openings (in these examples, the bodies being the coupling segments). Engagement between the other surface portion and the body limits the motion of the shank through the opening and supports the body, for example, in spaced apart relation to another body.

Figures 1 and 2 show a stop assembly 32 having a retention element in the form of an O-ring 36. O-ring 36 has an inwardly facing circumferential surface 38 that engages the shank 20 and a flank surface 40 that engages the lug 28 of the coupling segment 12. The O-ring is formed from elastomeric material and is sized so that its inner diameter is smaller than the outer diameter of shank 20, resulting in a tight interference fit between the O-ring and the fastener 16. The elasticity of the O-ring allows it to hold tightly to the shank, and when used as a pair on one or both fasteners 16, the Q-rings support the coupling segments in spaced apart relation as shown in Figure 1. The grip of the O-rings with the fastener is such as to maintain the coupling segments 12 and 14 in spaced relation for shipping, handling and installation on pipe elements, but upon application of sufficient force to the coupling segments, the O-rings are movable along the fastener or fasteners to allow the coupling segments to move toward one another and engage the pipe elements 34 as shown in Figure 3. Movement of the O-rings may be effected manually, for example, by pushing the coupling segments toward each other, or by tightening the fasteners and using screw action between the nut 22 and bolt 18 to draw the coupling segments into engagement with the pipe elements.

The force required to move the O-rings may be augmented by incorporating an undercut 17 on the shank 20 at a point along the shank where the O-ring is to be positioned in order to maintain the segments 12 and 14 in spaced apart relation. Undercut 17 is preferably positioned on a non-threaded section of the shank 20, and provides purchase for the O-ring, increasing the force necessary to dislodge and move it when it is desired to bring the segments toward one another.

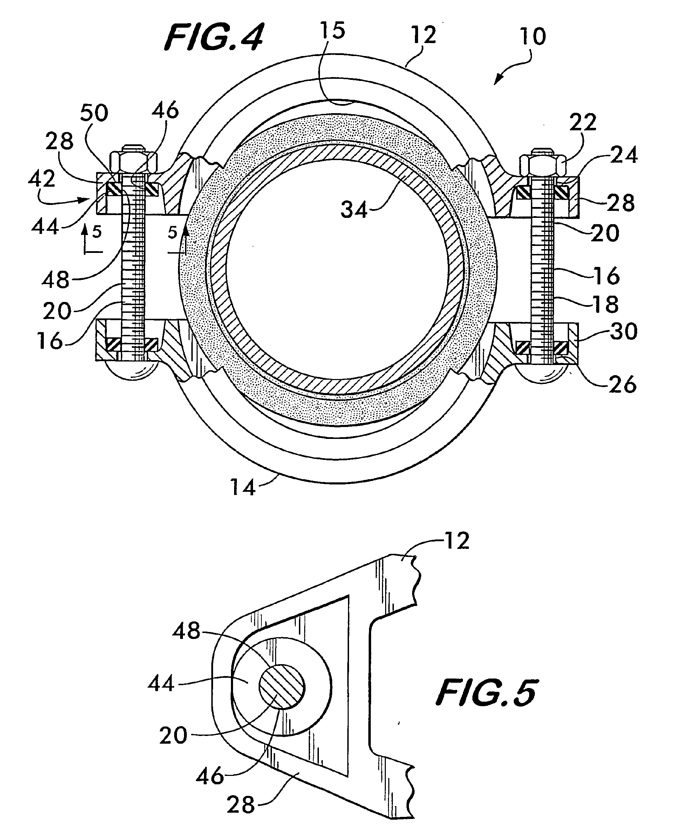

Figures 4 and 5 show another stop assembly embodiment 42 having retention elements in the form of one or more collars 44. The collars are preferably cylindrical in shape and have an axially extending bore 46 therethrough. Bore 46 provides an inwardly facing surface 48 that engages the shank 20 of fasteners 16. The bore has a diameter smaller than the diameter of the shank so as to create an interference fit between the collar and the fastener which allows the collar to grip the fastener and maintain the coupling segments 12 and 14 in spaced relation until sufficient force is applied to move the segments toward one another for engagement with pipe elements. It is advantageous to have shank 20 threaded over its entire length to increase the force necessary to move to the collars relatively to the fasteners, as the threads tend to dig into the surface 48. (This is also true for other stop assembly embodiments disclosed herein.) The annular surfaces 50 at the ends of the collars engage the segments and, being larger than the opening through the couplings, limit the motion of the shank relatively to the couplings.

Preferably the collars are formed from an elastic material allowing them to be biased into gripping engagement with the fasteners, yet expandable so as to slide over the fasteners when the coupling segments are moved into engagement with the pipe elements. The degree of force required to move the collars 44, or the aforementioned O-rings 36 is largely a function of the degree of interference, the coefficient of friction between the surfaces in contact, and the elastic modulus of the material forming the collars or the O-rings.

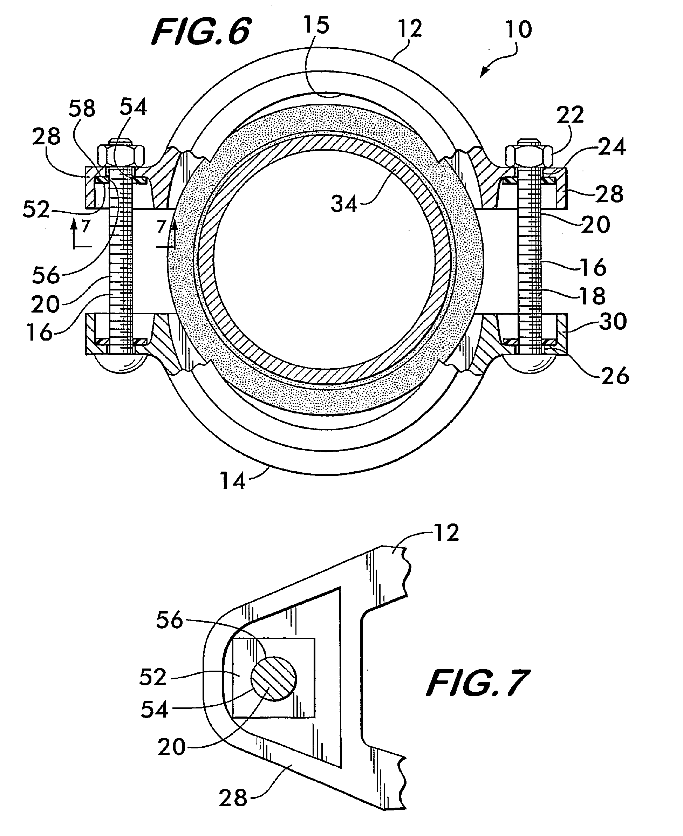

Figures 6 and 7 illustrate another embodiment of a retention element comprising a flexible elastic plate 52 having an opening 54 therein that receives the shank 20 of fastener 16. Plate 52 is preferably thin and sufficiently flexible and elastic so as to be slidable along shank 20, but maintain its position on the shank in the absence of sufficient applied force. The plate is preferably made from a polymer material, such as engineering plastics, but could also be made of cardboard or metal. The opening 50 defines an inwardly facing edge 56 that engages the shank. The plate surface 58 engages the couplings to limit their motion relatively to the shank.

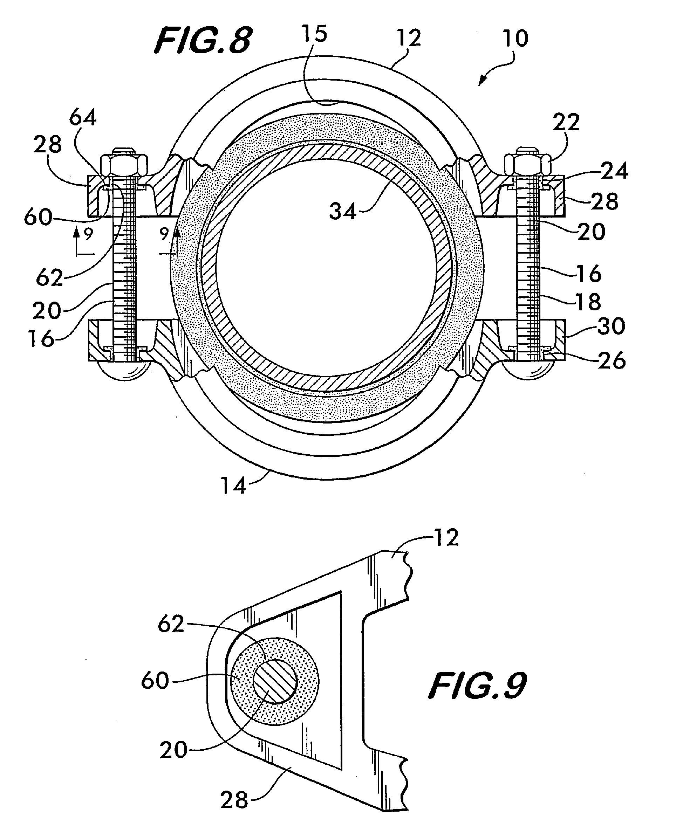

The retention element shown in Figures 8 and 9 comprises a frangible material 60 applied to both the shank 20 and the coupling segments 12 and 14. The frangible material preferably has the characteristics of a fillet, with a first surface 62 engaged with the shank and a second surface 64 engaged with the couplings, preferably the lugs. The frangible material adheres to both the coupling segments and the fasteners to maintain the segments in spaced relation, but the frangible material is weaker than the material which it bonds together so that, upon the application of force, the bond between the frangible material and either or both the fastener and the coupling segments are broken allowing the segments to move relatively to the fasteners. The frangible material is preferably an adhesive, but could also comprise solder, caulk or paint.

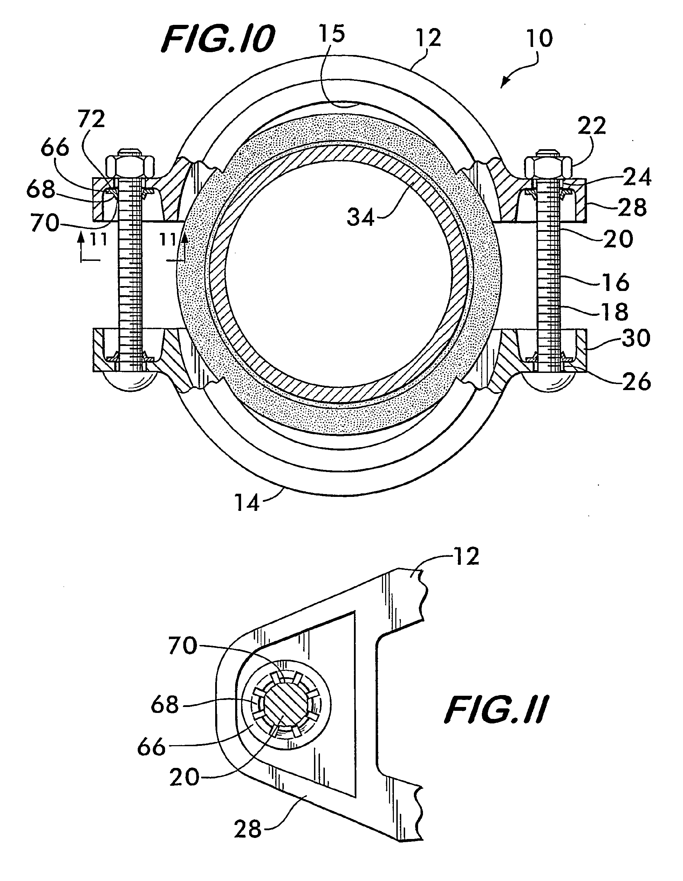

In Figures 10 and 11, the retention element comprises a washer 66 having a plurality of flexible, resilient teeth 68 that face inwardly and define an inner diameter of the washer that is smaller than the diameter of the shank. The edges 70 of teeth 68 engage the shank and the annular surface 72 of the washer engages the coupling segments, thereby limiting relative motion of the two components. The teeth are resiliently flexible, however, and will bend to allow the washer to move along the shank upon the application of sufficient force. The washers may comprise metal or polymeric material.

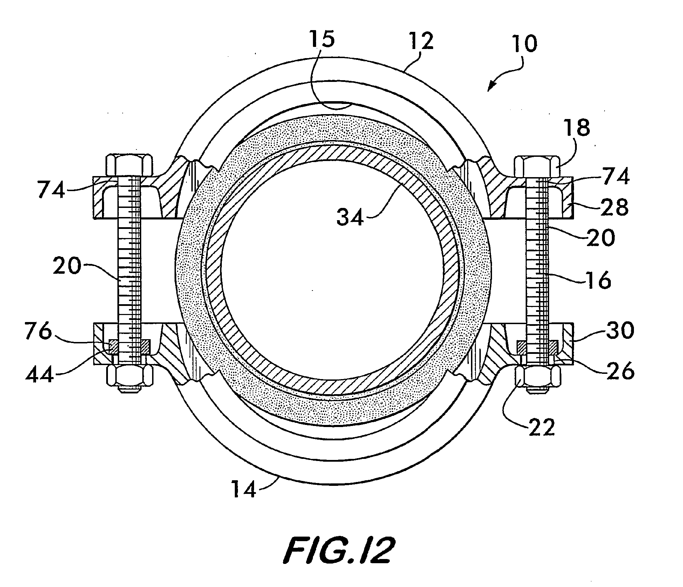

Figure 12 illustrates a stop assembly not forming part of the invention wherein the shank 20 is attached to one of the coupling elements 12. In this example the shank is threadedly engaged in a tapped opening 74 in the coupling segment 12, but it could alternately comprise a stud integrally formed with the coupling segment. A retention element 76 is mounted on the shank 20 and engages the other coupling segment 14 to maintain it in spaced relation until force is applied to engage the segments with pipe elements as described above. Although a collar 44 is illustrated as comprising the retention element, any of the examples of retention elements could also be used with this stop assembly.

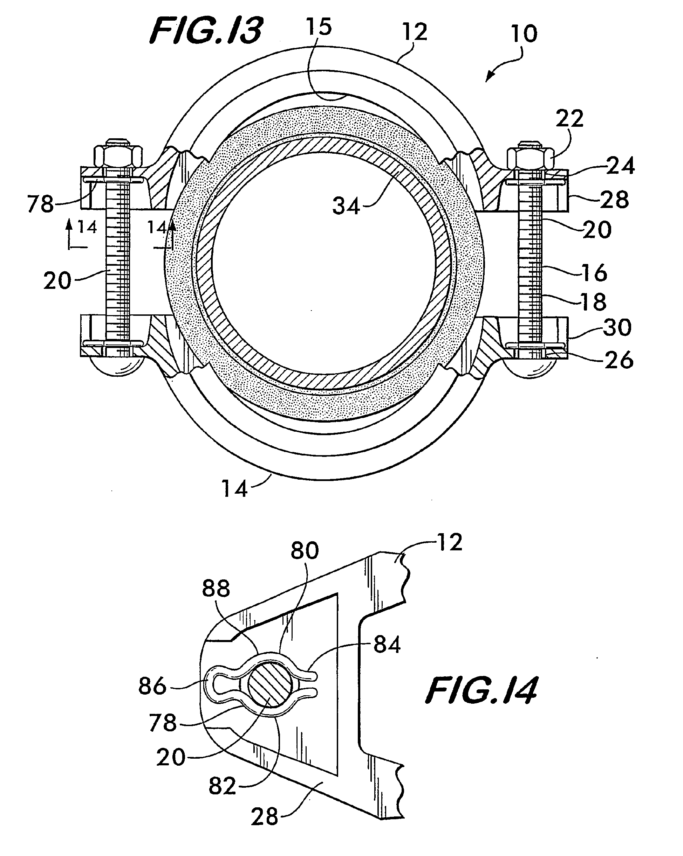

Figures 13 and 14 show a retention element comprising a clip 78 having legs 80 and 82 defining an aperture therebetween to receive the shank. The legs are flexible and resiliently biased to engage the shank 20 on opposite sides from one another. The clips also engage the coupling segments 12 and 14 to limit their motion relatively to the shank. Motion of the segments is permitted by removing the clip transversely from the shank. This may be effected manually or with hand tools such as a pair of pliers. Alternately, the clip may slide along the shank to permit the segments to engage the pipe elements. Preferably the clip is formed from a wire 84 made of spring steel. Wire 84 has a reverse curve 86 that defines legs 80 and 82. Preferably the legs themselves have a curvature 88 that accommodates the shank and thereby increases the hold of the clip thereto.

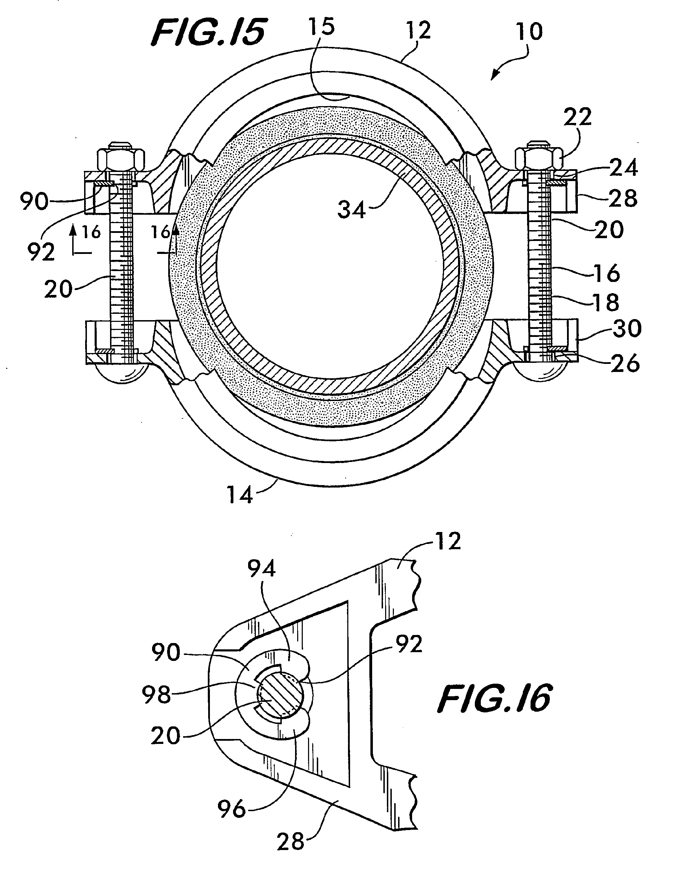

Figures 15 and 16 show another clip-type retention element embodiment comprising a plate 90 having a slot 92 therein defining legs 94 and 96. The shank 20 is received within slot 92. Grip of the plate on the shank may be increased by including teeth 98 projecting inwardly into slot 92. The clip may be removed from the shank by sliding it transversely to the shank so that the shank passes through the slot, thereby permitting motion of the shank relatively to the coupling segments. Alternatively, it could also slide along the shank. Preferably the plate 90 is formed of metal and is resilient and flexible.

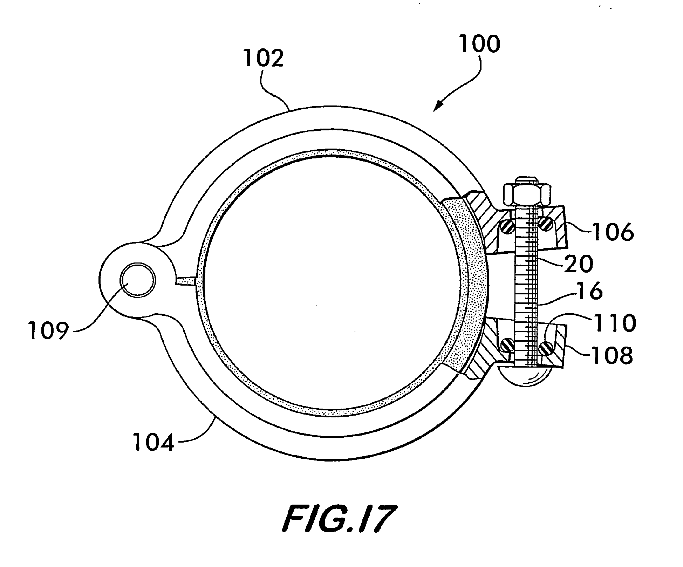

Figure 17 shows a coupling embodiment 100 wherein the segments 102 and 104 are joined at one end by a hinge 109. The opposite ends 106 and 108 are held in spaced relation by retention elements 110 engaged with shank 20 of fastener 16 that is used to draw the coupling segments 102 and 104 together for engagement with pipe elements to form a pipe joint. Retention elements 110 may comprise any of the embodiments described herein.

The stop assemblies disclosed herein may be used in conjunction with couplings modified to allow them to be positioned in closer proximity to one another when in spaced apart relation. Such modifications including positioning notches or cut-outs adjacent to the lugs to provide clearance between the coupling and the pipe elements allowing them to be inserted into the couplings. Alternatively, the couplings could be flexible and have arcuate surfaces that do not extend the entire length of the coupling, i.e., they subtend an angle of less than 180°.

Stop assemblies according to the invention allow pipe couplings to be held in spaced relation until force is applied to bring them toward one another for engagement with pipe elements. This allows the couplings to be preassembled at the factory and handled in the field as a single unit, thereby facilitating rapid and convenient assembly of pipe joints by inserting the pipe elements between the coupling segments while they are in spaced apart relation and then forcing the coupling elements into engagement with the pipe elements by, for example, removing the retention elements from the shanks or sliding the retention elements along the shanks to permit relative motion between the coupling segments and the shanks.

## Claims

1. A stop assembly (32) for limiting the motion of a shank (20) of a fastener (16) extended through an opening (24, 26) in a body (12, 14), said stop assembly comprises a retention element (36, 44, 52, 60, 68, 78, 90),
**characterized in that**
said retention element is positionable on said fastener (16) at a predetermined position along the shank (20), said retention element has a first surface portion engageable with said shank (20) for holding said retention element at said predetermined position; and
said retention element further has a second surface portion engageable with said body (12, 14), engagement of said second surface portion with said body limiting motion of said shank (20) through said opening (24,26);
said stop assembly (32) further comprises a second retention element (36, 44, 52, 60, 68, 78, 90) positionable on said fastener (16) at a second predetermined position along said shank (20), said second retention element having a first surface portion engageable with said shank (20) for holding said second retention element at said second predetermined position;
said second retention element further having a second surface portion engageable with a second body (12, 14) having a second opening therein, engagement of said second surface portion with said second body limiting motion of said shank (20) through said second opening (24, 26).

2. A stop assembly (32) according to Claim 1, wherein said retention element has an aperture oriented transversely to said shank (20) and permitting removal of said retention element from said shank by movement of said retention element transversely thereto, removal of said retention element allowing relative motion between said shank and said body (12, 14);
preferably said retention element comprises a clip (78) having first and second legs (80, 82) positioned adjacent to one another defining said aperture, said legs being flexible and resiliently biased to engage said shank, said clip being positionable on said shank by deforming said legs to receive said shank therebetween;
more preferably said clip (78) comprises a wire (84), said wire having a reverse curve (86) defining said legs, said legs having a curvature (88) sized and shaped to receive said shank (20) therebetween.

3. A stop assembly (32) according to Claim 2, wherein said retention element has an aperture oriented transversely to said shank and permitting removal of said retention element from said shank by movement of said retention element transversely thereto, removal of said retention element allowing relative motion between said shank (20) and said body (12, 14) and said clip (78) comprises a plate (90) having a slot (92) therein defining said aperture, said shank (20) being movable through said slot for removal of said clip from said shank.

4. A stop assembly (32) according to Claim 1, wherein said retention element has an aperture therethrough for receiving said shank, said aperture having a diameter less than the diameter of said shank (20), said body engaging said shank with an interference fit, said retention element being movable lengthwise along said shank for positioning said retention element at said predetermined position; preferably said retention element comprises an o-ring (36); more preferably said shank has an undercut (17) that receives said o-ring.

5. A stop assembly according to Claim 1, wherein said retention element has an aperture therethrough for receiving said shank (20), said aperture having a diameter less than the diameter of said shank (20), said body engaging said shank with an interference fit, said retention element being movable lengthwise along said shank for positioning said retention element at said predetermined position and said retention element comprises:
• a collar (44) formed from an elastic material,
• comprises a flexible, elastic plate (52), or
• a washer (66) having an inner diameter defined by a plurality of flexible teeth (68) extending radially inwardly, said teeth being engageable with said shank for holding said washer at said predetermined position, said teeth (68) being flexibly deformable and allowing relative motion between said washer (66) and said shank (20).

6. A stop assembly (32) according to Claim 1, wherein said retention element comprises a frangible material (60) engaging said body and said fastener (16), said frangible material being separable from one of said retention element and said body (12, 14) upon the application of force to said shank (20) to permit relative motion between said body and said shank; preferably said frangible material (60) is selected from the group consisting of adhesive, solder, caulk and paint.

7. A pipe coupling (10) positionable straddling facing end portions of a pair of pipe elements for securing said pipe elements together in end-to-end relationship, said pipe coupling comprising:
• a plurality of coupling segments (12, 14) engageable with said pipe elements for holding them in said end to end relationship, said coupling segments being positioned in facing relation and having paired aligned openings extending therethrough; and
• the stop assembly (32) of claim 1,
wherein the elongated shank (20) extends through a pair of said aligned openings for joining said coupling segments (12, 14) together, and the second surface portion is engaged with one of said coupling segments (12, 14) for limiting motion of said fastener (16) relative to said one coupling segment.

8. A pipe coupling (10) according to Claim 7, wherein one of said retention elements (36, 44, 52, 60, 68, 78, 90) has an aperture oriented transversely to said shank (20) and permitting removal of said one retention element from said shank by movement of said retention element transversely thereto, removal of said one retention element allowing relative motion between said fastener (16) and one of said coupling segments (12, 14).

9. A pipe coupling (10) according to Claim 8, wherein said one retention element comprises a clip (78) having first and second legs (80, 82) positioned adjacent to one another defining said aperture, said legs being flexible and resiliently biased into engagement with said shank (20), said clip being positioned on said shank by deforming said legs to receive said shank therebetween; preferably said clip comprises a wire (84), said wire having a reverse curve (86) defining said legs (80, 82), said legs having a curvature (88) sized and shaped to receive said shank therebetween.

10. A pipe coupling (10) according to Claim 8, wherein said clip (78) comprises a plate (90) having a slot (92) therein defining said aperture, said shank (20) being movable through said slot for removal of said clip from said shank (20).

11. A pipe coupling (10) according to Claim 8, wherein one of said retention elements has an aperture therethrough for receiving said shank (20), said aperture having a diameter less than the diameter of said shank, said one retention element engaging said shank with an interference fit, said one retention element being movable along said shank for permitting relative motion between said fastener (16) and one of said coupling segments (12, 14); preferably one of said retention element comprises:
• an o-ring (36), or
• a collar (44) formed from an elastic material, or
• a flexible, elastic plate (52), or
• a washer (66) having an inner diameter defined by a plurality of flexible teeth (68) extending radially inwardly, said teeth being engageable with said shank, said teeth being flexibly deformable and allowing relative motion between said washer (66) and said fastener (16).

12. A pipe coupling (10) according to Claim 7, wherein:
• said retention element comprises a frangible material (60) engaging said one of said coupling segments (12, 14) and said shank (20), said frangible material being separable from one of said shank and said one coupling segment upon the application of force to said fastener (16) to permit relative motion between said one coupling segment and said fastener, or
• said shank (20) is attached to said one of said coupling segments (12, 14), said retention element cooperating with said other coupling segment to hold said coupling segments (12, 14) in spaced apart relation.

## Patentansprüche

1. Anschlaganordnung (32) zur Begrenzung der Bewegung eines zu einer Befestigungsvorrichtung (16) gehörenden Schraubenschaftes (20), welcher sich durch ein in einem Körper (12, 14) befindliches Loch (24, 26) erstreckt, wobei die genannte Anschlaganordnung ein Arretierelement (36, 44, 52, 60, 68, 78, 90) umfasst,
**dadurch gekennzeichnet, dass**
das genannte Arretierelement an der genannten Befestigungsvorrichtung (16) an einer vorbestimmten Stelle längs des Schraubenschaftes (20) positionierbar ist, dieses Arretierelement einen ersten Flächenbereich aufweist, welcher mit dem genannten Schraubenschaft (20) in bündigen Kontakt gebracht werden kann, um das genannte Arretierelement an der genannten vorbestimmten Stelle festzuhalten, und das genannte Arretierelement außerdem einen zweiten Flächenbereich aufweist, welcher mit dem genannten Körper (12, 14) in bündigen Kontakt gebracht werden kann, wobei der bündige Kontakt des genannten zweiten Flächenbereichs mit dem genannten Körper die Bewegung des genannten Schraubenschaftes (20) durch das genannte Loch (24, 26) begrenzt;
die genannte Anschlaganordnung (32) außerdem ein zweites Arretierelement (36, 44, 52, 60, 68, 78, 90) umfasst, welches an der genannten Befestigungsvorrichtung (16) an einer zweiten vorbestimmten Stelle längs des genannten Schraubenschaftes (20) positionierbar ist, wobei das genannte zweite Arretierelement einen ersten Flächenbereich aufweist, welcher mit dem genannten Schraubenschaft (20) in bündigen Kontakt gebracht werden kann, um das genannte zweite Arretierelement an der genannten zweiten vorbestimmten Stelle festzuhalten;
das genannte zweite Arretierelement außerdem einen zweiten Flächenbereich aufweist, welcher mit einem zweiten Körper (12, 14) in bündigen Kontakt kommen kann, der ein zweites Loch aufweist, wobei der bündige Kontakt des genannten zweiten Flächenbereichs mit dem genannten zweiten Körper die Bewegung des genannten Schraubenschaftes (20) durch das genannte Loch (24, 26) begrenzt.

2. Anschlaganordnung (32) nach Anspruch 1, bei welcher das genannte Arretierelement eine Öffnung aufweist, die quer zum genannten Schraubenschaft (20) ausgerichtet ist und das Entfernen des genannten Arretierelementes von dem genannten Schraubenschaft **dadurch** ermöglicht, dass das genannte Arretierelement in Querrichtung bewegt wird, wobei durch das Entfernen des genannten Arretierelementes die Relativbewegung zwischen dem genannten Schraubenschaft und dem genannten Körper (12, 14) ermöglicht wird;
vorzugsweise umfasst das genannte Arretierelement eine Klammer (78), welche ein erstes und ein zweites Bein (80, 82) aufweist, die nebeneinander angeordnet sind und die genannte Öffnung festlegen, wobei die genannten Beine flexibel sind und federnd vorgespannt sind, um mit dem genannten Schraubenschaft einen bündigen Kontakt herzustellen, wobei die genannte Klammer an dem genannten Schraubenschaft **dadurch** positionierbar ist, dass die genannten Beine verformt werden, so dass der genannte Schraubenschaft zwischen ihnen Aufnahme findet;
stärker vorzuziehen ist, dass die genannte Klammer (78) einen Draht (84) umfasst, wobei dieser Draht eine Umlenkkrümmung (86) aufweist, welche die genannten Beine festlegt, wobei die genannten Beine eine Krümmung (88) aufweisen, die dergestalt bemessen und gestaltet ist, dass der genannte Schraubenschaft (20) zwischen ihnen Aufnahme findet.

3. Anschlaganordnung (32) nach Anspruch 2, bei welcher das genannte Arretierelement eine Öffnung aufweist, welche quer zu dem genannten Schraubenschaft ausgerichtet ist und das Entfernen des genannten Arretierelementes von dem genannten Schraubenschaft **dadurch** ermöglicht, dass das genannte Arretierelement in Querrichtung bewegt wird, wobei das Entfernen des genannten Arretierelements die Relativbewegung zwischen dem genannte Schraubenschaft (20) und dem genannten Körper (12, 14) ermöglicht, und die genannte Klammer (78) eine Platte (90) umfasst, welche einen Schlitz (92) aufweist, der die genannte Öffnung festlegt, wobei der genannte Schraubenschaft (20) durch den genannten Schlitz hindurch beweglich ist, um die genannte Klammer von dem genannten Schraubenschaft zu entfernen.

4. Anschlaganordnung (32) nach Anspruch 1, bei welcher das genannte Arretierelement eine durchgehende Öffnung zur Aufnahme des genannten Schraubenschaftes aufweist, wobei die genannte Öffnung einen Durchmesser hat, der kleiner ist als der Durchmesser des genannten Schraubenschaftes (20), und der genannte Körper an dem genannten Schraubenschaft mit einer Presspassung in bündigen Kontakt kommt, wobei das genannte Arretierelement in Längsrichtung längs des genannten Schraubenschaftes beweglich ist, um das genannte Arretierelement an der genannten vorbestimmten Stelle positionieren zu können; vorzugsweise umfasst das genannte Arretierelement einen Runddichtring (36), wobei stärker vorzuziehen ist, dass der genannte Schraubenschaft einen Unterschnitt (17) aufweist, welcher den genannten Runddichtring aufnimmt.

5. Anschlaganordnung (32) nach Anspruch 1, bei welcher das genannte Arretierelement eine durchgehende Öffnung zur Aufnahme des genannten Schraubenschaftes (20) aufweist, wobei die genannte Öffnung einen Durchmesser hat, der kleiner ist als der Durchmesser des genannten Schraubenschaftes (20), und der genannte Körper an dem genannten Schraubenschaft mit einer Presspassung in bündigen Kontakt kommt, wobei das genannte Arretierelement in Längsrichtung längs des genannten Schraubenschaftes beweglich ist, um das genannte Arretierelement an der genannten vorbestimmten Stelle positionieren zu können, und wobei das genannte Arretierelement umfasst:
• einen Bund (44) aus einem elastischen Material,
• eine flexible elastische Platte (52) oder
• eine Unterlegscheibe (66) mit einem Innendurchmesser, welcher durch eine gewisse Anzahl von flexiblen Zähnen (68) festgelegt ist, die sich in radialer Richtung nach innen erstrecken, wobei die genannten Zähne mit dem genannten Schraubenschaft in bündigen Kontakt kommen können, um die genannte Unterlegscheibe an der genannten vorbestimmten Stelle festzuhalten, und die genannten Zähne (68) auf flexible Weise verformbar sind und die Relativbewegung zwischen der genannte Unterlegscheibe (66) und dem genannten Schraubenschaft (20) ermöglichen.

6. Anschlaganordnung (32) nach Anspruch 1, bei welcher das genannte Arretierelement ein berstfähiges Material (60) umfasst, welches sich mit dem genannten Körper und der genannten Befestigungsvorrichtung (16) im bündigen Kontakt befindet, wobei das genannte berstfähige Material von einem der beiden genannten Elemente, Arretierelement und Körper (12, 14), nach Einwirken einer Kraft auf den genannten Schraubenschaft (20) abtrennbar ist, um die Relativbewegung zwischen dem genannten Körper und dem genannten Schraubenschaft zu ermöglichen; vorzugsweise wird das genannte berstfähige Material (60) aus der Gruppe ausgewählt, die aus Kleber, Lötmittel, Dichtungsmasse und Farbe besteht.

7. Rohrkupplung (10), welche positionierbar ist, wenn sie im gespreizten Zustand über einander gegenüber stehende Endbereiche eines Paares von Rohrelementen gebracht wird, um die genannten Rohrelemente in einer Stoßverbindung aneinander zu befestigen, wobei die genannte Rohrkupplung umfasst:
• eine gewisse Anzahl von Kupplungssegmenten (12, 14), welche mit den genannten Rohrelementen in bündigen Kontakt gebracht werden können, um sie in der genannten Stoßverbindung festzuhalten, wobei die genannten Kupplungssegmente einander gegenüber stehend positioniert werden und paarweise ausgerichtete durchführende Löcher aufweisen; und
• die Anschlaganordnung (32) nach Anspruch 1,
bei welcher der ziemlich lange Schraubenschaft (20) sich durch ein Paar der genannten ausgerichteten Löcher hindurch erstreckt, um die genannten Kupplungssegmente (12, 14) miteinander zu verbinden, und der zweite Flächenbereich mit einem der genannten Kupplungssegmente (12, 14) bündigen Kontakt hat, um die Bewegung der genannten Befestigungsvorrichtung (16) relativ zu dem genannten einen Kupplungssegment zu begrenzen.

8. Rohrkupplung (10) nach Anspruch 7, bei welcher eines der genannten Arretierelemente (36, 44, 52, 60, 68, 78, 90) eine Öffnung aufweist, welche quer zum genannten Schraubenschaft (20) ausgerichtet ist und das Entfernen des genannten einen Arretierelementes von dem genannten Schraubenschaft in der Weise ermöglicht, dass das genannte Arretierelement in Querrichtung bewegt wird, wobei das Entfernen des genannten einen Arretierelementes die Relativbewegung zwischen der genannten Befestigungsvorrichtung (16) und einem der genannten Kupplungssegmente (12, 14) ermöglicht.

9. Rohrkupplung (10) nach Anspruch 8, bei welcher das genannte eine Arretierelement eine Klammer (78) umfasst, welche ein erstes und ein zweites Bein (80, 82) aufweist, die nebeneinander angeordnet sind und die genannte Öffnung festlegen, wobei die genannten Beine flexibel sind und zum Zweck des bündigen Kontakts mit dem genannten Schraubenschaft (20) federnd vorgespannt sind, wobei die genannte Klammer auf dem genannten Schraubenschaft in der Weise positioniert wird, dass die genannten Beine verformt werden, um zwischen sich den genannten Schraubenschaft aufzunehmen; vorzugsweise umfasst die genannte Feder einen Draht (84), wobei dieser Draht eine Umlenkkrümmung (86) aufweist, welche die genannten Beine (80, 82) festlegt und die genannten Beine eine Krümmung (88) aufweisen, die dergestalt bemessen und gestaltet ist, dass die Beine den genannten Schraubenschaft zwischen sich aufnehmen.

10. Rohrkupplung (10) nach Anspruch 8, bei welcher die genannte Klammer (78) eine Platte (90) umfasst, welche darin einen Schlitz (92) aufweist, der die genannte Öffnung festlegt, wobei der genannte Schraubenschaft (20) durch den genannten Schlitz hindurch zu dem Zweck beweglich ist, die genannte Klammer von dem genannten Schraubenschaft (20) zu entfernen.

11. Rohrkupplung (10) nach Anspruch 8, bei welcher eines der genannten Arretierelemente eine durchgehende Öffnung zur Aufnahme des genannten Schraubenschaftes (20) aufweist, wobei die genannte Öffnung einen Durchmesser hat, der kleiner ist als der Durchmesser des genannten Schraubenschaftes, und wobei das genannte eine Arretierelement mit dem Schraubenschaft in Form einer Presspassung bündigen Kontakt hat und das genannte eine Arretierelement längs des genannten Schraubenschaftes beweglich ist, um die Relativbewegung zwischen der genannten Befestigungsvorrichtung (16) und einem der genannten Kupplungssegmente (12, 14) zu ermöglichen; vorzugsweise umfasst eines der genannten Arretierelemente:
• einen Runddichtring (36) oder
• einen Bund (44) aus einem elastischen Material oder
• eine flexible elastische Platte (52) oder
• eine Unterlegscheibe (66) mit einem Innendurchmesser, welcher durch eine gewisse Anzahl von flexiblen Zähnen (68) festgelegt ist, die sich in radialer Richtung nach innen erstrecken, wobei die genannten Zähne mit dem genannten Schraubenschaft in bündigen Kontakt kommen können und die genannten Zähne auf flexible Weise verformbar sind und die Relativbewegung zwischen der genannten Unterlegscheibe (66) und der genannten Befestigungsvorrichtung (16) ermöglichen.

12. Rohrkupplung (10) nach Anspruch 7, bei welcher:
• das genannte Arretierelement ein berstfähiges Material (60) umfasst, welches an dem genannten einen der genannten Kupplungssegmente (12, 14) und dem genannten Schraubenschaft (20) anliegt, wobei das genannte berstfähige Material von einem der Elemente, genannter Schraubenschaft und genanntes eine Kupplungssegment, nach Aufbringen einer Kraft auf die genannte Befestigungsvorrichtung (16) abtrennbar ist, um die Relativbewegung zwischen dem genannten einen Kupplungssegment und der genannten Befestigungsvorrichtung zu ermöglichen, oder
• der genannte Schraubenschaft (20) an dem genannten einen der genannten Kupplungssegmente (12, 14) angebracht ist, wobei das genannte Arretierelement mit dem genannten anderen Kupplungssegment zusammenwirkt, um die genannten Kupplungssegmente (12, 14) auf Abstand zu halten.

## Revendications

1. Ensemble de butée (32) pour limiter le déplacement d'une tige (20) d'une pièce de fixation (16) s'étendant à travers une ouverture (24, 26) dans un corps (12, 14), ledit ensemble de butée comprenant un élément de retenue (36, 44, 52, 60, 68, 78, 90),
**caractérisé en ce que**
ledit élément de retenue peut être positionné sur ladite pièce de fixation (16) en une position prédéterminée le long de la tige (20), ledit élément de retenue possède une première partie de surface pouvant être engagée avec ladite tige (20) pour maintenir ledit élément de retenue sur ladite position prédéterminée, et ledit élément de retenue possède, de plus, une seconde partie de surface pouvant être engagée dans ledit corps (12, 14), l'engagement de ladite seconde partie de surface avec ledit corps limitant le déplacement de ladite tige (20) à travers ladite ouverture (24, 26) ;
ledit ensemble de butée (32) comprend, de plus, un second élément de retenue (36, 44, 52, 60, 68, 78, 90) pouvant être positionné sur ladite pièce de fixation (16) en une seconde position prédéterminée le long de ladite tige (20), ledit second élément de retenue possédant une première partie de surface pouvant être engagée avec ladite tige (20) pour maintenir ledit second élément de retenue dans ladite seconde position prédéterminée ;
ledit second élément de retenue possédant, de plus, une seconde partie de surface pouvant être engagée avec ledit second corps (12, 14) possédant une seconde ouverture, l'engagement de ladite seconde partie de surface avec ledit second corps limitant le déplacement de ladite tige (20) à travers ladite seconde ouverture (24, 26).

2. Ensemble de butée (32) selon la revendication 1, dans lequel ledit élément de retenue possède une ouverture orientée de façon transversale à ladite tige (20) et permettant un enlèvement dudit élément de retenue à partir de ladite tige par déplacement dudit élément de retenue de façon transversale vers celle-ci, l'enlèvement dudit élément de retenue autorisant un mouvement relatif entre ladite tige et ledit corps (12, 14);
de préférence ledit élément de retenue comprend une fixation à ressort (78) possédant des première et seconde jambes (80, 82) positionnées adjacentes l'une à l'autre définissant ladite ouverture, lesdites jambes étant flexibles et poussées, de façon élastique, pour engager ladite tige, ladite fixation à ressort pouvant être positionnée sur ladite tige par déformation desdites jambes pour recevoir entre elles ladite tige ;
encore plus de préférence ladite fixation à ressort (78) comprend un fil (84), ledit fil possédant une courbe inversée (86) définissant lesdites jambes, lesdites jambes possédant une courbure (88) dimensionnée et conformée pour recevoir ladite tige (20) entre elles.

3. Ensemble de butée (32) selon la revendication 2, dans lequel ledit élément de retenue possède une ouverture orientée de façon transversale à ladite tige et permettant un enlèvement dudit élément de retenue à partir de ladite tige par déplacement dudit élément de retenue de façon transversale vers celle-ci, l'enlèvement dudit élément de retenue autorisant un mouvement relatif entre ladite tige (20) et ledit corps (12, 14) et ladite fixation à ressort (78) comprend une plaque (90) possédant une fente (92) à l'intérieur définissant ladite ouverture, ladite tige (20) étant mobile à travers ladite fente pour un enlèvement de ladite fixation à ressort à partir de ladite tige.

4. Ensemble de butée (32) selon la revendication 1, dans lequel ledit élément de retenue possède une ouverture traversante pour recevoir ladite tige, ladite ouverture possédant un diamètre inférieur à celui de ladite tige (20), ledit corps engageant ladite tige avec un ajustement avec serrage, ledit élément de retenue étant mobile selon la longueur le long de ladite tige pour positionner ledit élément de retenue en ladite position prédéterminée ; de préférence ledit élément de retenue comprend un joint torique d'étanchéité (36) ; encore plus de préférence ladite tige possède une gorge (17) qui reçoit ledit joint torique d'étanchéité.

5. Ensemble de butée selon la revendication 1, dans lequel ledit élément de retenue possède une ouverture traversante pour recevoir ladite tige (20), ladite ouverture possédant un diamètre inférieur à celui de ladite tige (20), ledit corps engageant ladite tige avec un ajustement avec serrage, ledit élément de retenue étant mobile selon la longueur le long de ladite tige pour positionner ledit élément de retenue sur ladite position prédéterminée et ledit élément de retenue comprend :
- un collier (44) formé d'un matériau élastique ;
- une plaque flexible élastique (52), ou
- un rondelle (66) possédant un diamètre intérieur défini par une pluralité de dents flexibles (68) s'étendant radialement vers l'intérieur, lesdites dents pouvant être engagées avec ladite tige pour maintenir ladite rondelle sur ladite position prédéterminée, lesdites dents (68) étant déformables de façon flexible et autorisant un mouvement relatif entre ladite rondelle (66) et ladite tige (20).

6. Ensemble de butée (32) selon la revendication 1, dans lequel ledit élément de retenue comprend un matériau frangible (60) engageant ledit corps et ladite pièce de fixation (16), ledit matériau frangible (60) pouvant être séparé d'une pièce parmi ledit élément de retenue et ledit corps (12, 14) lors de l'application d'une force à ladite tige (20) pour permettre un mouvement relatif entre ledit corps et ladite tige ; de préférence ledit matériau frangible (60) est sélectionné dans le groupe comprenant un adhésif, une brasure tendre, un matage et de la peinture.

7. Dispositif de couplage de tubes (10) enjambant, de façon positionnable, des parties d'extrémité en vis-à-vis d'une paire d'éléments de tube pour solidariser lesdits éléments de tube bout à bout, ledit dispositif de couplage de tubes comprenant :
- une pluralité de segments de couplage (12, 14) pouvant être engagés avec lesdits éléments de tube pour les maintenir dans ladite relation de bout à bout, lesdits segments de couplage étant positionnés en vis-à-vis et possédant des ouvertures alignées par paire s'étendant à travers ceux-ci ; et
- l'ensemble de butée (32) selon la revendication 1 ;
dans lequel ladite tige allongée (20) s'étend à travers une paire desdites ouvertures alignées pour joindre lesdits segments de couplage (12, 14) ensemble, et la seconde partie de surface est engagée avec un desdits segments de couplage (12, 14) pour limiter tout déplacement de ladite pièce de fixation (16) par rapport audit segment de couplage.

8. Dispositif de couplage de tubes (10) selon la revendication 7, dans lequel un desdits éléments de retenue (36, 44, 52, 60, 68, 78, 90) possède une ouverture orientée de façon transversale à ladite tige (20) et permettant un enlèvement dudit élément de retenue à partir de ladite tige par déplacement dudit élément de retenue de façon transversale vers celle-ci, l'enlèvement dudit élément de retenue autorisant un mouvement relatif entre ladite pièce de fixation (16) et un desdits segments de couplage (12, 14).

9. Dispositif de couplage (10) selon la revendication 8, dans lequel ledit élément de retenue comprend une fixation à ressort (78) possédant des première et seconde jambes (80, 82) positionnées adjacentes l'une à l'autre définissant ladite ouverture, lesdites jambes étant flexibles et poussées, de façon élastique, en engagement avec ladite tige (20), ladite fixation à ressort pouvant être positionnée sur ladite tige par déformation desdites jambes pour recevoir entre elles ladite tige ; de préférence ladite fixation à ressort comprend un fil (84), ledit fil possédant une courbe inversée (86) définissant lesdites jambes (80, 82), lesdites jambes possédant une courbure (88) dimensionnée et conformée pour recevoir ladite tige (20) entre elles.

10. Dispositif de couplage (10) selon la revendication 8, dans lequel ladite fixation à ressort (78) comprend une plaque (90) possédant une fente (92) à l'intérieur définissant ladite ouverture, ladite tige (20) étant mobile à travers ladite fente pour un enlèvement de ladite fixation à ressort à partir de ladite tige (20).

11. Dispositif de couplage (10) selon la revendication 8, dans lequel un desdits éléments de retenue possède une ouverture traversante pour recevoir ladite tige (20), ladite ouverture possédant un diamètre inférieur à celui de ladite tige, ledit élément de retenue engageant ladite tige avec un ajustement avec serrage, ledit élément de retenue étant mobile le long de ladite tige pour permettre un mouvement relatif entre ladite pièce de fixation (16) et un desdits segments de couplage (12,14) ; de préférence un desdits éléments de retenue comprend :
- un joint torique d'étanchéité (36) ; ou
- un collier (44) formé d'un matériau élastique ; ou
- une plaque flexible élastique (52), ou
- un rondelle (66) possédant un diamètre intérieur défini par une pluralité de dents flexibles (68) s'étendant radialement vers l'intérieur, lesdites dents pouvant être engagées avec ladite tige, lesdites dents étant déformables de façon flexible et autorisant un mouvement relatif entre ladite rondelle (66) et ladite pièce de fixation (16).

12. Dispositif de couplage (10) selon la revendication 7, dans lequel :
- ledit élément de retenue comprend un matériau frangible (60) engageant ledit segment parmi lesdits segments de couplage (12, 14) et ladite tige (20), ledit matériau frangible (60) pouvant être séparé d'un élément parmi ladite tige et ledit segment de couplage lors de l'application d'une force à ladite pièce de fixation (16) pour permettre un mouvement relatif entre ledit segment de couplage et ladite pièce de fixation ; ou
- ladite tige (20) est fixée audit segment parmi lesdits segments de couplage (12, 14), ledit élément de retenue coopérant avec ledit autre segment de couplage pour maintenir lesdits segments de couplage (12, 14) de façon espacée.
